(19) Europäisches Patentamt
European Patent Office
Office européen des brevets

(11) Veröffentlichungsnummer: **0 507 129 A1**

# (12) EUROPÄISCHE PATENTANMELDUNG

(21) Anmeldenummer: **92104278.4**

(22) Anmeldetag: **12.03.92**

(51) Int. Cl.5: **C07F 5/00**, C07F 5/06, C23C 16/30, C07F 9/50, C07F 9/66, C07F 9/90

(30) Priorität: **25.03.91 DE 4109723**

(43) Veröffentlichungstag der Anmeldung: **07.10.92 Patentblatt 92/41**

(84) Benannte Vertragsstaaten: **DE FR GB NL**

(71) Anmelder: **MERCK PATENT GESELLSCHAFT MIT BESCHRÄNKTER HAFTUNG**
**Frankfurter Strasse 250 Postfach 4119**
**W-6100 Darmstadt(DE)**

(72) Erfinder: **Pohl, Ludwig, Dr.**
**Niebergallweg 5**
**W-6100 Darmstadt(DE)**
Erfinder: **Schumann, Herbert, Dr.**
**Weberstrasse 3a**
**W-1000 Berlin 49(DE)**
Erfinder: **Wassermann, Wilfried, Dr.**
**Krumme Strasse 25**
**W-1000 Berlin 12(DE)**
Erfinder: **Hartmann, Uwe, Dr.**
**Alt-Tegel 33**
**W-1000 Berlin 27(DE)**
Erfinder: **Seuss, Thomas, Dr.**
**Hermannplatz 2**
**W-1000 Berlin 61(DE)**

## (54) Metallorganische Verbindungen.

(57) Die Erfindung betrifft metallorganische Verbindungen der Elemente Al, Ga und In, die zweifach intramolekular stabilisiert sind, sowie deren Verwendung zur Herstellung dünner Filme und epitaktischer Schichten durch Abscheidung aus der flüssigen oder festen Phase.

EP 0 507 129 A1

Die Erfindung betrifft metallorganische Verbindungen, die Aluminium, Gallium oder Indium als Metalle enthalten, sowie die Verwendung dieser Verbindungen für die Herstellung dünner Filme oder epitaktischer Schichten durch Abscheidung des Metalls, vornehmlich aus der flüssigen oder festen Phase, unter Zersetzung der metallorganischen Verbindung.

Die Abscheidung solcher Schichten aus entweder reinen Elementen der dritten Gruppe oder aus Kombinationen mit anderen Elementen, wie z.B. Galliumarsenid, Indiumphosphid oder Galliumphosphid, kann zur Herstellung von elektrischen, elektronischen, optischen oder optoelektronischen Schaltelementen, Verbindungshalbleitern und Lasern verwendet werden.

Die Eigenschaften dieser Filme hängen von den Abscheidungsbedingungen und der chemischen Zusammensetzung des abgeschiedenen Films ab.

Die Abscheidung dieser Schichten kann aus der festen, der flüssigen oder der Gasphase erfolgen.

Für die Abscheidung aus der Gasphase kommen alle bekannten Methoden wie die Metal-Organic Chemical Vapour Deposition (MOCVD) Methode, die Photo-Metal-Organic Vapour Phase (Photo-MOVP) Methode, die Laser-Chemical Vapour Deposition (Laser CVD) Methode oder die Metal-Organic Magnetron Scattering (MOMS) Methode in Frage.

Bei der MOCVD-Methode werden metallorganische Verbindungen eingesetzt, die sich unter Abscheidung des Metalls bei einer Temperatur unterhalb etwa 1100 °C zersetzen. Typische Apparaturen, die zur Zeit für MOCVD benutzt werden, bestehen aus einem "bubbler" mit einer Zufuhr für die metallorganische Komponente, einer Reaktionskammer, die das zu beschichtende Substrat enthält, sowie einer Quelle für ein Trägergas, das gegen die metallorganische Komponente inert sein soll. Der "bubbler" wird auf einer konstanten, relativ niedrigen Temperatur gehalten, die vorzugsweise über dem Schmelzpunkt der metallorganischen Verbindung, aber weit unterhalb der Zersetzungstemperatur liegt. Die Reaktions- oder Zersetzungskammer hat vorzugsweise eine sehr viel höhere Temperatur, die unterhalb 1100 °C liegt, bei welcher die metallorganische Verbindung sich vollständig zersetzt und das Metall abgeschieden wird. Durch das Trägergas wird die metallorganische Verbindung in den Dampfzustand gebracht und mit dem Trägergas in die Zersetzungskammer geschleust. Der Massenfluß des Dampfes ist hierbei genau steuerbar, und somit ist auch ein kontrolliertes Wachsen der dünnen Schichten möglich.

Die anderen Methoden der Gasphasenabscheidung unterscheiden sich hiervon im wesentlichen nur durch die Art der Zuführung der für die Zersetzung erforderlichen Energie.

Nachteilig an den Methoden der Gasphasenabscheidung ist, daß sie technisch und apparativ aufwendig sind und daß sie einer komplexen Steuerung und Kontrolle zahlreicher Prozeßparameter bedürfen.

In dieser Hinsicht sind Verfahren zur Abscheidung aus der flüssigen oder festen Phase wesentlich günstiger. Hier muß lediglich das Substrat mit einer flüssigen oder festen Beschichtung, die eine geeignete metallorganische Verbindung enthält, versehen und dann zur Zersetzung der metallorganischen Verbindung beispielsweise thermisch behandelt werden.

Für die Erzeugung epitaktischer Schichten wurden bislang hauptsächlich Metallalkyle wie z.B. Trimethylgallium, Trimethylaluminium oder Trimethylindium verwendet. Diese sehr flüchtigen Verbindungen sind extrem luft- und feuchtigkeitsempfindlich, selbstentzündlich und teilweise bereits bei Raumtemperatur zersetzlich. Daher sind für ihre Herstellung, den Transport, die Lagerung und die Anwendung dieser Verbindungen aufwendige Vorsichtsmaßnahmen notwendig. Aufgrund allein schon ihrer hohen Flüchtigkeit sind diese Metallalkyle nur in Methoden der Gasphasenabscheidung einsetzbar. Systembedingt ist bei der Gasphasenepitaxie ein hoher Verlust an unumgesetztem Metallalkyl unvermeidbar. Aufgrund der Empfindlichkeit ist die Entsorgung problematisch und eine Rückgewinnung praktisch nicht möglich.

Zwischenzeitlich bekannt gewordene stabilisierte Metallalkyle wie etwa Addukte mit Lewisbasen, wie z.B. Trimethylamin und Triphenylphosphin (z.B. beschrieben in GB 21 23 422, EP-A 108469 oder EP-A 176537) oder intramolekular stabilisierte Verbindungen dieser Art (z.B. beschrieben in DE-OS 36 31 469 und DE-OS 38 41 643) sind aufgrund entweder noch nicht ausreichender Stabilität oder zu hoher Flüchtigkeit ebenfalls nur in Gasphasenabscheidungsmethoden einsetzbar.

Aufgabe der vorliegenden Erfindung war es nun, Metallalkyl-Verbindungen zu finden, die unempfindlich und einfach handhabbar sind und die für die Abscheidung des Metalls aus der flüssigen oder festen Phase geeignet sind.

Es wurde nun gefunden, daß metallorganische Verbindungen der Formel I

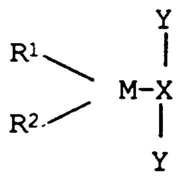

(I)

worin

M Aluminium, Gallium oder Indium,

X -CH, N oder ein 5- oder 6-gliedriger aromatischer, heterocyclischer oder cycloaliphatischer Ring, jeweils in o,o'-Position mit Y substituiert,

Y $-(CH_2)_n-NR^3R^4$, $-(CH_2)_n-PR^3R^4$, $-(CH_2)_n-AsR^3R^4$, $-(CH_2)_n-SbR^3R^4$ mit n = 1, 2 oder 3 und

$R^1$, $R^2$, $R^3$ und $R^4$ jeweils unabhängig voneinander Wasserstoff oder eine Alkylgruppe mit 1 bis 8 C-Atomen, die teilweise oder vollständig fluoriert sein kann,

bedeutet,
die genannten Bedingungen in hervorragender Weise erfüllen.

Die neuen Verbindungen der Formel I sind zweifach intramolekular stabilisiert durch Elektronenübertragung vom Stickstoff-, Phosphor-, Arsen- oder Antimonatom der Gruppe Y auf das elektronenarme IIIa-Element. Sie besitzen daher eine besonders hohe Stabilität gegenüber Luft und Sauerstoff. Sie sind sehr einfach zu handhaben, da sie nicht selbstentzündlich sind und sich bei Raumtemperatur auch nicht zersetzen. Durch Temperatureinwirkung bis etwa 1100 °C lassen sie sich aber unter Abscheidung des Metalls zersetzen. Es hat sich gezeigt, daß die Verbindungen der Formel I einen niedrigen Dampfdruck aufweisen und somit nur gering flüchtig sind. Sie eignen sich daher im besonderen Maße für die Abscheidung des Metalls aus der flüssigen oder festen Phase. Da die Verbindungen der Formel I stabile und gut abspaltbare Abgangsgruppen enthalten, resultiert ein geringer Einbau an Kohlenstoff, was für die Qualität der Endprodukte große Vorteile hat.

Gegenstand der Erfindung sind somit die metallorganischen Verbindungen der Formel I.

Gegenstand der Erfindung ist weiterhin die Verwendung der metallorganischen Verbindungen der Formel I zur Abscheidung des Metalls auf Substrate, insbesondere aus der flüssigen oder festen Phase.

Ferner ist Gegenstand der Erfindung ein Verfahren zur Herstellung von Schichten auf Substraten durch Abscheidung des Metalls aus metallorganischen Verbindungen, wobei man auf dem Substrat eine flüssige oder feste Beschichtung enthaltend eine metallorganische Verbindung der Formel I erzeugt und anschließend bis über die Zersetzungstemperatur erhitzt.

In Formel I bedeutet M Aluminium (Al), Gallium (Ga), oder Indium (In), vorzugsweise Ga oder In.

X steht für eine mit je 2 Gruppen Y substituierte CH-Gruppe, für entsprechend substituiertes N oder für einen 5- oder 6-gliedrigen aromatischen, heterocyclischen oder cycloaliphatischen Ring, der jeweils in o,o'-Position mit zwei Resten Y substituiert ist. Als 5-gliedriger Ring kommt vornehmlich Cyclopentyl, Cyclopentenyl und Cyclopentadienyl in Betracht. Als 6-gliedriger Ring kommt vornehmlich Phenyl, 4-Pyridyl, Cylohexyl, Cylohexenyl und Cyclohexadienyl in Betracht. Vorzugsweise ist X ein Phenylring.

Die mit dem Metallatom M verbundenen Reste $R^1$ und $R^2$ können Wasserstoff oder Alkylgruppen mit 1-8 C-Atomen, gegebenenfalls teilweise oder vollständig fluoriert, sein. Vorzugsweise sind $R^1$ und $R^2$ Alkylgruppen mit 1-4 C-Atomen, insbesondere Methyl, Ethyl, n-Propyl und iso-Propyl.

Y steht für die Gruppen $-(CH_2)_n-NR^3R^4$, $-(CH_2)_n-PR^3R^4$, $-(CH_2)_n-AsR^3R^4$ und $-(CH_2)_n-SbR^3R^4$, in denen $R^3$ und $R^4$ jeweils Wasserstoff oder Alkylgruppen mit 1-8 C-Atomen, gegebenenfalls teilweise oder vollständig fluoriert, sein können und n die Zahlen 1, 2 oder 3 bedeutet. Vorzugsweise sind $R^3$ und $R^4$ Alkylgruppen mit 1-4 C-Atomen, insbesondere Methyl und Ethyl. Y stellt besonders bevorzugt die Gruppe $-(CH_2)_n-NR^3R^4$ dar.

Unterformeln Ia, Ib und Ic

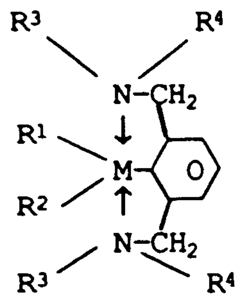

(Ia)

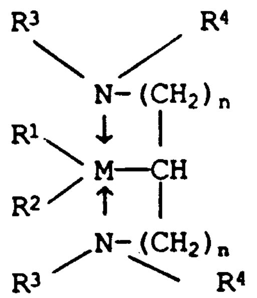

(Ib)

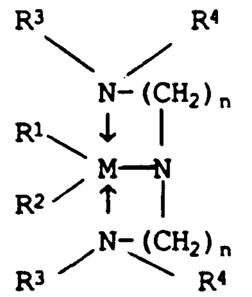

(Ic)

mit den voranstehend für M, $R^1$, $R^2$, $R^3$ und $R^4$ bereits gegebenen Definitionen stellen besonders bevorzugte Gruppen erfindungsgemäßer metallorganischer Verbindungen dar.

In den Verbindungen der Formel I bzw. Ia, Ib, Ic gelangen durch die gezielte Anordnung der Gruppen Y in o,o'-Position des mit dem Metallatom M verbundenen Ringes X bzw. an der Gruppe X, wenn diese für -CH oder -N steht, in sterisch besonders günstiger Weise jeweils zwei elektronenreiche Atome der V. Hauptgruppe in die elektronenarme Koordinationssphäre des Metallatoms M. Hierdurch wird eine besonders wirksame Stabilisierung der metallorganischen Verbindung bewirkt.

Die Verbindungen der Formeln I bzw. Ia, Ib, Ic werden nach an sich bekannten Methoden hergestellt, wie sie in der Literatur (z.B. G. Bähr, P. Burbar, Methoden der organischen Chemie, Band XIII/4, Georg Thieme Verlag, Stuttgart (1970)) beschrieben sind, und zwar unter Reaktionsbedingungen, die für die genannten Umsetzungen bekannt und geeignet sind. Dabei kann man auch von an sich bekannten, hier nicht näher erwähnten Varianten Gebrauch machen.

So können Verbindungen der Formeln I bzw. Ia, Ib, Ic z. B. hergestellt werden, indem man Dialkylchloride der Elemente Al, Ga oder In mit einem Alkalimetallorganyl, dessen organischer Rest die Gruppe $XY_2$ darstellt, oder mit einer entsprechenden Grignard-Verbindung in einem inerten Lösungsmittel umsetzt. Als Lösungsmittel kommen dabei alle diejenigen in Frage, die die Umsetzung nicht stören und nicht in das Reaktionsgeschehen eingreifen. Die Reaktionstemperaturen entsprechen im wesentlichen denen, die aus der Literatur für die Herstellung ähnlicher Verbindungen bekannt sind.

Die erfindungsgemäßen metallorganischen Verbindungen der Formel I bzw. Ia, Ib, Ic erweisen sich als ausnehmend stabil gegenüber Luft, Luftfeuchtigkeit und Sauerstoff. Sie zeigen keine Veränderung auch wenn sie längere Zeit der Luft ausgesetzt sind. Bei Raumtemperatur sind sie stabil, können aber bei erhöhter Temperatur unter Abscheidung des Metalls zersetzt werden. Die Verbindungen der Formel I sind bei Raumtemperatur überwiegend fest mit niedrigem meist im Bereich zwischen 30 und 100 °C liegendem Schmelzpunkt. Sie zeigen darüber hinaus bei Raumtemperatur einen nur geringen Dampfdruck, sind also nur wenig flüchtig. Ihre Löslichkeit in organischen Lösungsmitteln wie beispielsweise aliphatischen oder aromatischen Kohlenwasserstoffen oder Äther ist vorzüglich.

Aufgrund dieser Eigenschaften sind die metallorganischen Verbindungen der Formel I grundsätzlich für alle Methoden der Abscheidung von Metallen durch Zersetzung von metallorganischen Verbindungen geeignet.

Besonders geeignet und bevorzugt zu verwenden sind die metallorganischen Verbindungen der Formel I für die Abscheidung des Metalls aus der flüssigen oder festen Phase, insbesondere für die Flüssigphasenepitaxie.

Bei dem erfindungsgemäßen Verfahren zur Herstellung dünner Filme oder epitaktischer Schichten auf beliebigen Substraten kann von an sich bekannten Methoden der Abscheidung aus der flüssigen oder festen Phase ausgegangen werden, bei denen aber die metallorganischen Verbindungen der Formel I eingesetzt werden.

Derartige Verfahren sind äußerst einfach durchzuführen; technisch sehr aufwendige und daher teure Anlagen wie sie bei der Gasphasenepitaxie gängig sind, werden nicht benötigt.

Das erfindungsgemäße Verfahren kann beispielsweise in der Art durchgeführt werden, daß man ein Substrat, z.B. einen Siliciumwafer mit einer flüssigen Formulierung, die eine metallorganische Verbindung der Formel I enthält - im einfachsten Fall ist dies eine Lösung dieser Verbindung in einem organischen Lösungsmittel - beschichtet. Diese Beschichtung kann vorzugsweise nach der an sich bekannten Methode des "spin-coating" erfolgen. Hierbei wird eine gewisse Menge der flüssigen Lösung bzw. Formulierung in die Mitte des Substrates aufgebracht und dieses dann mit einer vorgewählten Drehzahl rotiert. Hierbei bildet

sich auf der Oberfläche des Substrates ein Film einheitlicher Schichtdicke, dessen Dicke durch die Schleuderdrehzahl und die Viskosität der Formulierung eingestellt und dessen Gehalt an Metall durch die Konzentration der metallorganischen Verbindung vorbestimmt werden kann. Nach Abdunsten des Lösungsmittels und Erhitzen über die Zersetzungstemperatur der metallorganischen Verbindung erhält man auf dem Substrat die Metallschicht.

Zur Herstellung von Mischmetallschichten, Verbindungshalbleitern, elektrischen, elektronischen, optischen und optoelektronischen Bauteilen oder Halbleiterlasern kann die Formulierung auch Verbindungen unterschiedlicher Metalle sowie anderer Elemente des Periodensystems, vorzugsweise Verbindungen von Elementen der V. Hauptgruppe, enthalten. Auch können während des Zersetzungsprozesses eine oder mehrere unter den angewandten Reaktionsbedingungen gasförmige Verbindungen, insbesondere des Arsens, Antimons oder Phosphors, wie beispielsweise $AsH_3$, $As(CH_3)_3$, oder weitere Dotierstoffe in den Gasraum der Zersetzungskammer zugeführt werden. Als Dotierstoffe können dabei vornehmlich flüchtige metallorganische Verbindungen von Eisen, Magnesium, Zink oder Chrom eingesetzt werden. Als bevorzugte Verbindungen gelten dabei z.B. $Zn(CH_3)_2$, $Mg(CH_3)_2$ oder $Fe(C_5H_5)_2$.

Ferner ist es möglich, die Verbindungen der Formel I auch selbst als Dotierstoffe in Abscheidungsprozessen anderer metallorganischer Verbindungen zuzusetzen.

Bei den derzeit sich im Einsatz befindlichen Verfahren der Gasphasenepitaxie und den entsprechenden Anlagen können systembedingt nur ca. 1-10 % der eingesetzten metallorganischen Verbindungen als Epitaxieschicht auf dem Substrat abgeschieden werden. Die Ausnutzung der teuren metallorganischen Verbindungen ist demnach hierbei sehr gering und die Rückgewinnung, sofern überhaupt möglich, bzw. Vernichtung der überschüssigen Mengen an metallorganischen Verbindungen ist problematisch.

Demgegenüber ist die Ausnutzung der erfindungsgemäßen metallorganischen Verbindungen der Formel I in Verfahren der Flüssigphasen- bzw. Festphasenepitaxie sehr hoch und die Rückgewinnung überschüssiger Mengen ist aufgrund der hohen Stabilität der erfindungsgemäßen Verbindungen einfach.

Die folgenden Beispiele sollen die Erfindung näher erläutern. Temperaturangaben erfolgen immer in °C. Fp. bedeutet Schmelzpunkt und Kp. Siedepunkt.

Beispiel 1

3,0 mmol 2,6-Bis(dimethylaminomethylen)phenyllithium erhalten aus 0,82 g (3,0 mmol) 2,6-Bis-(dimethylaminomethylen)phenylbromid und 1,9 ml n-Butyllithium (3,0 mmol; 1,6 mol/l in Hexan) werden zu einer Lösung von 0,4 g (3,0 mmol) Dimethylgalliumchlorid in 10 ml Hexan gegeben. Nach 12 Stunden Rühren bei Raumtemperatur wird abfiltriert, das Lösungsmittel im Vakuum abgezogen und der Rückstand im Vakuum sublimiert. Man erhält [2,6-Bis(dimethylaminomethylen)phenyl]dimethylgallium als farblose Kristalle, Fp. 34 °C.

Beispiel 2

Analog zu Beispiel 1 erhält man aus 2,71 g (10,0 mmol) 2,6-Bis(dimethylaminomethylen)phenylbromid in 40 ml Hexan, 6,3 ml n-Butyllithium (10,0 mmol; 1,6 mol/l in Hexan) und 1,8 g (10,0 mmol) Dimethylindiumchlorid in 20 ml Hexan [2,6-Bis(dimethylaminomethylen)phenyl]dimethylindium, welches durch Kühlen einer konzentrierten Hexan-Lösung auf -30 °C in Form farbloser Kristalle gewonnen wird, Fp. 53 °C.

Beispiel 3

Analog zu Beispiel 2 erhält man aus 2,5 g (9,2 mmol) 2,6-Bis(dimethylaminomethylen)phenylbromid in 40 ml Hexan, 5,8 ml n-Butyllithium (9,2 mmol; 1,6 mol/l in Hexan) und 1,92 g (10,0 mmol) Diethylindiumchlorid in 20 ml Hexan [2,6-Bis(dimethylaminomethylen)phenyl]diethylindium als farblose Kristalle, Fp. 41 °C.

Beispiel 4

Analog zu Beispiel 1 erhält man aus 2,2 g (8,1 mmol) 2,6-Bis(dimethylaminomethylen)phenylbromid in 40 ml Hexan, 5,1 ml n-Butyllithium (8,1 mmol; 1,6 mol/l in Hexan) und 1,90 g (8,1 mmol) Di-n-propylindium in 20 ml Hexan [2,6-Bis(dimethylaminomethylen)phenyl]di-n-propylindium, welches durch Vakuumdestillation als farblose Flüssigkeit gewonnen wird, Kp. 125 °C/0,03 mbar.

Beispiel 5

Analog zu Beipsiel 1 erhält man aus 2,4 g (7,3 mmol) 2,6-Bis(diethylaminomethylen)phenylbromid in 40 ml Hexan, 4,6 ml Butyllithium (7,3 mmol; 1,6 mol/l in Hexan) und 1,5 g (7,3 mmol) Diethylindiumchlorid in 20 ml Hexan [2,6-Bis(diethylaminomethylen)phenyl]diethylindium, welches durch Vakuumdestillation als farblose Flüssigkeit gewonnen wird, Kp. 115 °C/0,04 mbar.

Analog werden erhalten:
[2,6-Bis(diethylaminomethylen)phenyl]di-n-propylindium
[2,6-Bis(diethylaminomethylen)phenyl]dimethylindium
[2,6-Bis(dimethylaminomethylen)phenyl]diethylgallium
[2,6-Bis(dimethylaminomethylen)phenyl]di-n-propylgallium
[2,6-Bis(diethylaminomethylen)phenyl]dimethylgallium
[2,6-Bis(diethylaminomethylen)phenyl]diethylgallium
[2,6-Bis(diethylaminomethylen)phenyl]di-n-propylgallium
[2,6-Bis(dimethylaminomethylen)phenyl]dimethylaluminium
[2,6-Bis(dimethylaminomethylen)phenyl]diethylaluminium
[2,6-Bis(dimethylaminomethylen)phenyl]di-n-propylaluminium
[2,6-Bis(diethylaminomethylen)phenyl]dimethylaluminium
[2,6-Bis(diethylaminomethylen)phenyl]diethylaluminium
[2,6-Bis(diethylaminomethylen)phenyl]di-n-propylaluminium
[3-(1,5-Dimethylamino)pentyl]dimethylgallium
[3-(1,5-Dimethylamino)pentyl]diethylgallium
[3-(1,5-Dimethylamino)pentyl]di-n-propylgallium
[3-(1,5-Diethylamino)pentyl]dimethylgallium
[3-(1,5-Diethylamino)pentyl]diethylgallium
[3-(1,5-Diethylamino)pentyl]di-n-propylgallium
[3-(1,5-Dimethylamino)pentyl]dimethylindium
[3-(1,5-Dimethylamino)pentyl]diethylindium
[3-(1,5-Dimethylamino)pentyl]di-n-propylindium
[3-(1,5-Diethylamino)pentyl]dimethylindium
[3-(1,5-Diethylamino)pentyl]diethylindium
[3-(1,5-Diethylamino)pentyl]di-n-propylindium
[3-(1,5-Dimethylamino)pentyl]dimethylaluminium
[3-(1,5-Dimethylamino)pentyl]diethylaluminium
[3-(1,5-Dimethylamino)pentyl]di-n-propylaluminium
[3-(1,5-Diethylamino)pentyl]dimethylaluminium
[3-(1,5-Diethylamino)pentyl]diethylaluminium
[3-(1,5-Diethylamino)pentyl]di-n-propylaluminium
[4-(1,7-Dimethylamino)heptyl]dimethylgallium
[4-(1,7-Dimethylamino)heptyl]diethylgallium
[4-(1,7-Dimethylamino)heptyl]di-n-propylgallium
[4-(1,7-Diethylamino)heptyl]dimethylgallium
[4-(1,7-Diethylamino)heptyl]diethylgallium
[4-(1,7-Diethylamino)heptyl]di-n-propylgallium
[4-(1,7-Dimethylamino)heptyl]dimethylindium
[4-(1,7-Dimethylamino)heptyl]diethylindium
[4-(1,7-Dimethylamino)heptyl]di-n-propylindium
[4-(1,7-Diethylamino)heptyl]dimethylindium
[4-(1,7-Diethylamino)heptyl]diethylindium
[4-(1,7-Diethylamino)heptyl]di-n-propylindium
[4-(1,7-Dimethylamino)heptyl]dimethylaluminium
[4-(1,7-Dimethylamino)heptyl]diethylaluminium
[4-(1,7-Dimethylamino)heptyl]di-n-propylaluminium
[4-(1,7-Diethylamino)heptyl]dimethylaluminium
[4-(1,7-Diethylamino)heptyl]diethylaluminium
[4-(1,7-Diethylamino)heptyl]di-n-propylaluminium
Dimethylgallium[bis(2-dimethylaminoethyl)]amid
Diethylgallium[bis(2-dimethylaminoethyl)]amid
Di-n-propylgallium[bis(2-dimethylaminoethyl)]amid
Dimethylgallium[bis(2-diethylaminoethyl)]amid

Diethylgallium[bis(2-diethylaminoethyl)]amid
Di-n-propylgallium[bis(2-diethylaminoethyl)]amid
Dimethylindium[bis(2-dimethylaminoethyl)]amid
Diethylindium[bis(2-dimethylaminoethyl)]amid
Di-n-propylindium[bis(2-dimethylaminoethyl)]amid
Dimethylindium[bis(2-diethylaminoethyl)]amid
Diethylindium[bis(2-diethylaminoethyl)]amid
Di-n-propylindium[bis(2-diethylaminoethyl)]amid
Dimethylaluminium[bis(2-dimethylaminoethyl)]amid
Diethylaluminium[bis(2-dimethylaminoethyl)]amid
Di-n-propylaluminium[bis(2-dimethylaminoethyl)]amid
Dimethylaluminium[bis(2-diethylaminoethyl)]amid
Diethylaluminium[bis(2-diethylaminoethyl)]amid
Di-n-propylaluminium[bis(2-diethylaminoethyl)]amid
Dimethylgallium[bis(2-dimethylaminopropyl)]amid
Diethylgallium[bis(2-dimethylaminopropyl)]amid
Di-n-propylgallium[bis(2-dimethylaminopropyl)]amid
Dimethylgallium[bis(2-diethylaminopropyl)]amid
Diethylgallium[bis(2-diethylaminopropyl)]amid
Di-n-propylgallium[bis(2-diethylaminopropyl)]amid
Dimethylindium[bis(2-dimethylaminopropyl)]amid
Diethylindium[bis(2-dimethylaminopropyl)]amid
Di-n-propylindium[bis(2-dimethylaminopropyl)]amid
Dimethylindium[bis(2-diethylaminopropyl)]amid
Diethylindium[bis(2-diethylaminopropyl)]amid
Di-n-propylindium[bis(2-diethylaminopropyl)]amid
Dimethylaluminium[bis(2-dimethylaminopropyl)]amid
Diethylaluminium[bis(2-dimethylaminopropyl)]amid
Di-n-propylaluminium[bis(2-dimethylaminopropyl)]amid
Dimethylaluminium[bis(2-diethylaminopropyl)]amid
Diethylaluminium[bis(2-diethylaminopropyl)]amid
Di-n-propylaluminium[bis(2-diethylaminopropyl)]amid

**Patentansprüche**

**1.** Metallorganische Verbindungen der Formel I

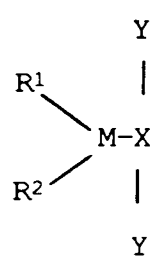

(I)

worin

| | |
|---|---|
| M | Aluminium, Gallium oder Indium, |
| X | -CH, N oder ein 5- oder 6-gliedriger, heterocyclischer aromatischer oder cycloaliphatischer Ring, jeweils in o,o'-Position mit Y substituiert, |
| Y | $-(CH_2)_n-NR^3R^4$, $-(CH_2)_n-PR^3R^4$, $-(CH_2)_n-AsR^3R^4$, $-(CH_2)_n-SbR^3R^4$ mit n = 1, 2 oder 3 und |
| $R^1$, $R^2$, $R^3$ und $R^4$ | jeweils unabhängig voneinander Wasserstoff oder eine Alkylgruppe mit 1 bis 8 C-Atomen, die teilweise oder vollständig fluoriert sein kann, |

bedeutet.

**2.** Verwendung der metallorganischen Verbindungen der Formel I nach Anspruch 1 zur Abscheidung des

Metalls auf Substraten.

3. Verwendung der metallorganischen Verbindungen der Formel I nach Anspruch 1 zur Abscheidung des Metalls auf Substraten aus der flüssigen oder festen Phase.

4. Verwendung der metallorganischen Verbindungen der Formel I nach Anspruch 1 zur Abscheidung epitaktischer Schichten.

5. Verwendung der metallorganischen Verbindungen der Formel I nach Anspruch 1 zur Herstellung von elektrischen, elektronischen, optischen und optoelektronischen Bauteilen.

6. Verfahren zur Herstellung von Schichten auf Substraten durch Abscheidung des Metalls aus metallorganischen Verbindungen, dadurch gekennzeichnet, daß man auf dem Substrat eine flüssige oder feste Beschichtung enthaltend eine metallorganische Verbindung der Formel I nach Anspruch 1 erzeugt und anschließend bis über die Zersetzungstemperatur erhitzt.

7. Verfahren nach Anspruch 6, dadurch gekennzeichnet, daß die die metallorganische Verbindung der Formel I enthaltende Beschichtung zusätzlich Verbindungen anderer Elemente und/oder Dotierstoffe enthält.

Europäisches Patentamt

# EUROPÄISCHER RECHERCHENBERICHT

Nummer der Anmeldung

EP 92 10 4278
Seite 1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | JOURNAL OF ORGANOMETALLIC CHEMISTRY<br>Bd. 365, 1989,<br>Seiten 11 - 18;<br>SCHUMANN, H. ET AL: 'SYNTHESIS AND MOLECULAR STRUCTURE OF CH3ä2,6-[(C2H592NCH2]2C6H3üINCL, AN INTRAMOLECULAR STABILIZED MONOMERIC DIORGANOINDIUM CHLORIDE' | 1 | C07F5/00<br>C07F5/06<br>C23C16/30<br>C07F9/50<br>C07F9/66<br>C07F9/90 |
| Y | * das ganze Dokument *<br>--- | 2-7 | |
| A | ANGEWANDTE CHEMIE. INTERNATIONAL EDITION ENGLISH<br>Bd. 29, Nr. 10, 1990,<br>Seiten 1150 - 1151;<br>COWLEY, A.H. ET AL: 'SYNTHESIS AND STRUCTURE OF A DIPHOSPHADIGALLETANE: A NOVEL BASE-STABILIZED GA2P2 RING SYSTEM' | 1 | |
| Y | * das ganze Dokument *<br>--- | 2-7 | |
| A | EP-A-0 399 190 (MERCK PATENT GMBH) | 1 | |
| Y | * das ganze Dokument *<br>--- | 2-7 | |
| A | WO-A-9 010 726 (MERCK PATENT GMBH) | 1 | **RECHERCHIERTE SACHGEBIETE (Int. Cl.5 )** |
| Y | * das ganze Dokument *<br>--- | 2-7 | |
| A | WO-A-8 901 479 (MERCK PATENT GMBH) | 1 | C07F |
| Y | * das ganze Dokument *<br>--- | 2-7 | C23C |
| P,X | CHEMISCHE BERICHTE<br>Bd. 124, Nr. 7, 1991,<br>Seiten 1567 - 1569;<br>SCHUMANN, H. ET AL: 'SYNTHESIS AND CHARACTERIZATION OF ORGANOGALLIUM AND ORGANOINDIUM COMPOUNDS WITH TRIDENTATE 2,6-BIS((DIALKYLAMINO)METHYL)PHENYL LIGANDS'<br>* das ganze Dokument *<br>---<br>-/-- | 1-7 | |

Der vorliegende Recherchenbericht wurde für alle Patentansprüche erstellt

| Recherchenort | Abschlußdatum der Recherche | Prüfer |
|---|---|---|
| DEN HAAG | 16 JUNI 1992 | RINKEL L.J. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

Europäisches Patentamt

# EUROPÄISCHER RECHERCHENBERICHT

Nummer der Anmeldung

EP 92 10 4278
Seite 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | CHEMICAL ABSTRACTS, vol. 114, 1991, Columbus, Ohio, US; abstract no. 218288U, POHL, L. ET AL: 'PHYSICAL PROPERTIES OF NON-PYROPHORIC GROUP III PRECURSORS FOR MOVPE' Seite 764 ; * Zusammenfassung * & J. CRYST. GROWTH Bd. 107, Nr. 1-4, 1991, Seiten 309 - 313; --- | 1-7 | |
| A | CHEMICAL ABSTRACTS, vol. 104, 1986, Columbus, Ohio, US; abstract no. 233451D, OSKAM, A. ET AL.: 'UV PHOTOELECTRON SPECTRA OF SQUARE PLANAR COMPLEXES OF THE NICKEL TRIAD METALS' Seite 564 ; * Zusammenfassung * & J. MOL. STRUCT. Bd. 142, 1986, Seiten 347 - 349; ----- | 1 | |
| | | | RECHERCHIERTE SACHGEBIETE (Int. Cl.5 ) |

Der vorliegende Recherchenbericht wurde für alle Patentansprüche erstellt

| Recherchenort | Abschlußdatum der Recherche | Prüfer |
|---|---|---|
| DEN HAAG | 16 JUNI 1992 | RINKEL L.J. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
& : Mitglied der gleichen Patentfamilie, übereinstimmendes Dokument